# EUROPEAN PATENT APPLICATION

(11) **EP 2 103 839 A2**
(43) Date of publication of application: **23.09.2009**
(21) Application number: 09250754.0
(22) Date of filing: 18.03.2009
(51) Int. Cl.: F16F 15/129

(54) **Clutch damper mechanism**

(30) Priority: 21.03.2008 JP 2008073362
(71) Applicant: Toyota Jidosha Kabushiki Kaisha, Toyota-shi, Aichi-ken 471-8571 (JP)
(72) Inventor: Sato, Tomohiro, Toyota-shi, Aichi-ken, 471-8571 (JP)
(74) Representative: Albutt, Anthony John

(57) **Abstract**

A clutch damper mechanism includes a rotating body (31) (hub plate (51), disk plate (32) and thrust bush (41)), a clutch hub (21), a cone spring (42), and a protruded portion (47). Clutch hub (21) is provided rotatable relative to rotating body (31) in a prescribed angle range. Cone spring (42) is for elastic support between rotating body (31) and clutch hub (21). Protruded portion (47) is brought into contact with clutch hub (21) in a part of the prescribed angle range, to increase elastic force exerted from thrust bush (41) across rotating body (31) and clutch hub (21). Because of such a structure, a clutch damper structure can be provided which attains desired damping characteristic with a simple structure.

## Description

This nonprovisional application is based on Japanese Patent Application No. 2008-073362 filed with the Japan Patent Office on March 21, 2008, the entire contents of which are hereby incorporated by reference.

### BACKGROUND OF THE INVENTION

### Field of the Invention

The present invention relates to a clutch damper mechanism and, more specifically, to a clutch damper mechanism that operates stepwise in accordance with the magnitude of transmitted rotating torque.

### Description of the Background Art

As an example of a conventional clutch damper mechanism, Japanese Patent Laying-Open No. 2002-266941 discloses a damper mechanism in which a friction mechanism is not activated within a prescribed angle range, of which object is to prevent increase of the prescribed angle (Patent Document 1). According to Patent Document 1, a clutch disk assembly has an input rotating body and a spline hub arranged to rotate relative to the input rotating body and receiving torque input from the input rotating body. In order to alleviate impact of the input rotating body and the spline hub that abut on each other at the end of the prescribed angle, an elastic member is provided on the clutch disk assembly.

Japanese Patent Laying-Open No. 07-293580 discloses a damper disk assembly of which object is to realize good operability in mounting an elastic connection assembly (Patent Document 2). According to Patent Document 2, the elastic connection assembly has a coil spring, a first seat member abutting on one end of the coil spring, and a second seat member abutting on the other end of coil spring, and engaged with the first seat member such that it can relatively move in the expanding/contracting direction of the coil spring.

Further, Japanese Patent Laying-Open No. 2000-205295 discloses a damper disk assembly of which object is to solve a problem caused by a float body having a desired elastic function, in a coil spring body (Patent Document 3). According to Patent Document 3, the clutch disk body has a damper mechanism arranged between an input rotating body and a spline hub and formed of a coil spring assembly. The coil spring assembly includes a large coil spring, a small coil spring, and a pair of spring seats molded from elastic resin material and arranged at opposite ends of small coil spring.

As disclosed in Patent Documents above, in order to transmit power generated by an engine to a transmission or to disengage transmission, a clutch device is used. The clutch device has a clutch hub outputting rotating torque to the transmission side, and a hub plate for transmitting the rotating torque from the engine side to the clutch hub. Clutch hub and hub plate are spline-engaged with a spring interposed, and relatively rotatable in a prescribed angle range. When rotating torque is input from the engine, spline teeth of the clutch hub and spline teeth of the hub plate mesh, and the torque is transmitted.

If spring stiffness of the spring is small, impact when spline teeth are brought into contact would be large, and desired damping characteristic would not be attained. In Patent Document 1 described above, an elastic member is provided for alleviating the impact on spline hub and input rotating body. Such a structure, however, requires arrangement of the elastic member and hole processing for arranging the elastic member, complicating the structure of clutch device.

### SUMMARY OF THE INVENTION

An object of the present invention is to solve the problem described above and its object is to provide a clutch damper mechanism that can attain desired damping characteristic with a simple configuration.

The present invention provides a clutch damper mechanism, including a first rotating body, a second rotating body, a first elastic member and an elastic characteristic changing member. The second rotating body is provided rotatable in a prescribed angle range relative to the first rotating body. The first elastic member is for elastic support between the first rotating body and the second rotating body. The elastic characteristic changing member is provided on the first rotating body, and brought into contact with the second rotating body at a part of the prescribed angle range to increase elastic force exerted from the first elastic member across the first rotating body and the second rotating body.

In the clutch damper mechanism structured as described above, by the elastic characteristic changing member that is in contact with the second rotating body in a part of the prescribed angle range, the elastic force to act between the first and second rotating bodies is increased. Thus, the desired damping characteristic can be attained by a simple structure.

Preferably, the elastic characteristic changing member is a protruded portion formed integral with the first rotating body and protruded toward the second rotating body. By the clutch damper mechanism structured as described above, desired damping characteristic can be attained with a simpler structure.

Preferably, the first rotating body is engaged with the second rotating body at an end of the prescribed angle range. The part of the prescribed angle range includes the end of the prescribed angle range. In the clutch damper mechanism structured as described above, impact when the first and second rotating bodies engage can be reduced.

Preferably, the first rotating body includes relatively rotatable third rotating body and fourth rotating body. The clutch damper mechanism further includes a second elastic member for elastic support between the third rotating body and the fourth rotating body. The second elastic member has a coefficient of elasticity higher than that of the first elastic member. As the clutch damper mechanism is structured as described above, the clutch damper mechanism operates stepwise in accordance with the magnitude of transmitted rotating torque and, desired damping characteristic can be attained.

As described above, according to the present invention, a clutch damper mechanism that can attain desired damping characteristic with a simple structure can be provided.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a cross-sectional view showing a clutch device to which the clutch damper mechanism in accordance with an embodiment of the present invention is applied.
Fig. 2 is a cross-sectional view of the clutch device taken along the line II-II of Fig. 1.
Fig. 3 is a cross-sectional view showing, partially in enlargement, the clutch device of Fig. 1.
Fig. 4 is a cross-sectional view showing the clutch device taken along the line IV-IV of Fig. 2.
Fig. 5 is a cross-sectional view of the clutch device showing a state of transition from idling to vehicle running state.
Fig. 6 is a cross-sectional view of the clutch device taken along the line VI-VI of Fig. 5.
Fig. 7 is a graph showing torsional characteristic of the clutch damper mechanism provided in the clutch device shown in Fig 1.
Fig. 8 is a graph showing, in enlargement, a portion surrounded by two-dotted line VIII of Fig. 7.

### DESCRIPTION OF THE PREFERRED EMBODIMENTS

An embodiment of the present invention will be described with reference to the figures. In the figures referred to in the following, the same or corresponding components are denoted by the same reference characters.

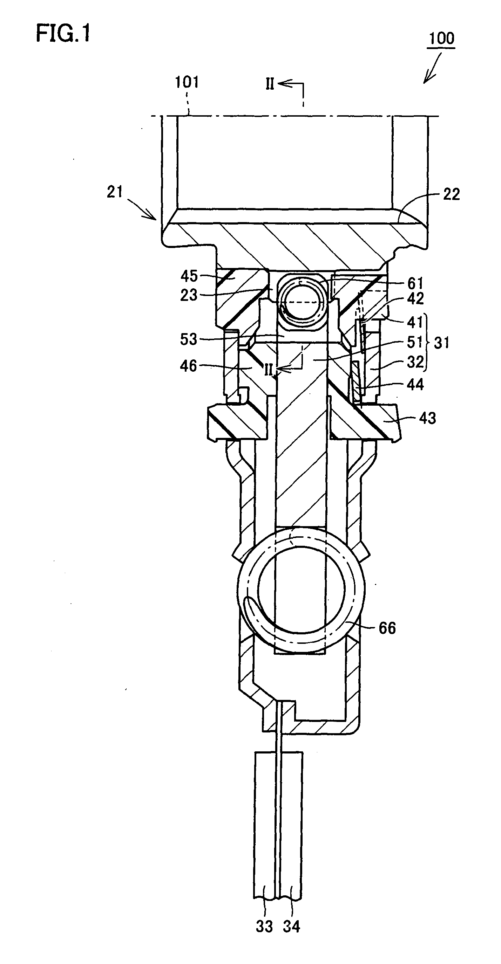

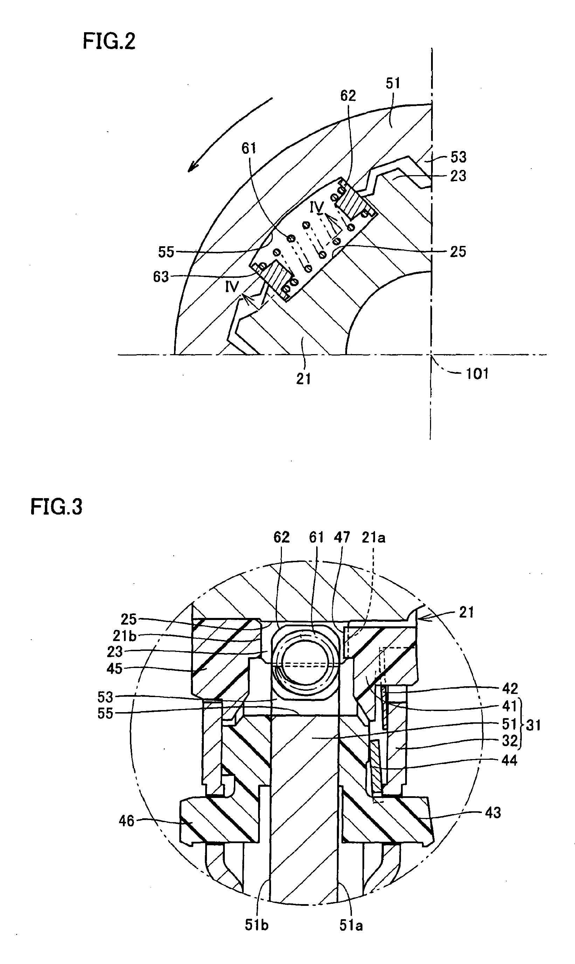

Fig. 1 is a cross-sectional view showing a clutch device to which the clutch damper mechanism in accordance with the embodiment of the present invention is applied. Fig. 2 is a cross-sectional view of the clutch device taken along the line II-II of Fig. 1.

Referring to Figs. 1 and 2, clutch device 100 is arranged between an engine as a power source and a transmission, for transmitting power generated by the engine to the transmission, or to disengage the power generated by the engine from the transmission. Clutch device 100 is a dry friction type clutch.

Clutch device 100 includes a clutch hub 21, a hub plate 51, a disk plate 32, and clutch linings 33 and 34. On a path of transmitting rotating torque from the engine to the transmission, hub plate 51, disk plate 32 and clutch linings 33 and 34 are arranged on the engine side providing rotating torque as an input, and clutch hub 21 is arranged on the transmission side receiving the output rotating torque.

Clutch hub 21 has a cylindrical shape with a central axis 101 as a phantom axis. Clutch hub 21 is rotatable about central axis 101. Clutch hub 21 has a spline portion 22 on its inner circumferential surface. With spline portion 22, an input shaft for inputting rotating torque to the transmission is spline-engaged. Clutch hub 21 has a spline portion 23 on its outer circumferential surface.

Hub plate 51 is arranged on the outer circumferential surface of clutch hub 21. Hub plate 51 is provided rotatable about central axis 101. Hub plate 51 has a plate shape extending annually with the central axis 101 being the center. Hub plate 51 has a spline portion 53 on its inner circumferential surface. Spline portions 23 and 53 engage with each other. Hub plate 51 is arranged such that in the circumferential direction with central axis 101 being the center, a gap is formed between the teeth formed at spline portion 23 and at spline portion 53. By such a structure, hub plate 51 and clutch hub 21 are provided rotatable relative to each other about central axis 101, in a prescribed angle range corresponding to the gap between the teeth of spline portions 23 and 53.

Disk plate 32 is arranged on the outer circumference of clutch hub 21. Disk plate 32 has such a cross-sectional shape that extends from opposite sides of spline portions 23 and 53 in the axial direction of central axis 101 to the radial direction with the central axis 101 being the center. Disk plate 32 is arranged to pinch hub plate 51 from opposite sides in the axial direction of central axis 101. Disk plate 32 is provided rotatable about central axis 101. Disk plate 32 and hub plate 51 are provided rotatable relative to each other about central axis 101.

Clutch linings 33 and 34 are arranged on the outer circumference of disk plate 32. Clutch linings 33 and 34 are fixed on disk plate 32, and rotate integral with disk plate 32, about central axis 101.

Clutch linings 33 and 34 are formed of a material having appropriate coefficient of friction, superior wear resistance and heat resistance, with its coefficient of friction invariable with respect to temperature change when connected. Specifically, it is formed of woven mold or resin mold using resin-finished glass fiber as a base, or it may be formed of metal, semi metal or ceramics, to improve strength and coefficient of thermal conductivity.

Clutch device 100 includes a pre-damper spring 61 and a main damper spring 66. Pre-damper spring 61 and main damper spring 66 are coil springs.

Clutch hub 21 has a trench 25. Trench 25 is formed recessed from the teeth surface of spline portion 23, on a part of axial range of central axis 101. Hub plate 51 has a trench 55. Trench 55 is formed recessed from the teeth surface of spline portion 53, at a position facing trench 25. In a space surrounded by trenches 25 and 55, pre-damper spring 61 is arranged. Though one pre-damper spring 61 is shown in the figure, a plurality of pre-damper springs 61 may be provided.

On opposite ends in the expanding/contracting direction of pre-damper spring 61, spring seats 62 and 63 are arranged, respectively, and pre-damper spring 61 is supported by spring seats 62 and 63. Pre-damper spring 61 is supported such that the direction of expansion/contraction of pre-damper spring 61 is aligned with the tangential direction in the rotation direction of clutch hub 21 and hub plate 51. By such a structure, clutch hub 21 and hub plate 51 are elastically supported in the rotation direction of clutch hub 21 and hub plate 51, by the elastic force of pre-damper spring 61.

Main damper spring 66 is arranged on the outer circumferential side of pre-damper spring 61. A plurality of main damper springs 66 are arranged spaced apart from each other about the central axis 101. Hub plate 51 and disk plate 32 are elastically supported in the rotation direction of hub plate 51 and disk plate 32, by the elastic force of main damper spring 66.

Fig. 3 is a cross-sectional view showing, partially in enlargement, the clutch device of Fig. 1. Referring to Figs. 1 to 3, clutch device 100 includes thrust bushes 41 and 45 as hysteresis generating members of a first stage, thrust bushes 43 and 46 as hysteresis generating members of a second stage, and cone springs 42 and 44.

Thrust bushes 41, 43, 45 and 46 are formed of resin material. Thrust bushes 41, 43, 45 and 46 are fixed on disk plate 32. Thrust bushes 41, 43, 45 and 46 rotate, integrally with disk plate 32, about central axis 101.

On opposite sides of clutch hub 21 and hub plate 51 in the axial direction of central axis 101, thrust bushes 41 and 43 and thrust bushes 45 and 46 are arranged. Thrust bushes 41 and 45 are arranged relatively on the inner circumferential side and thrust bushes 43 and 46 are arranged relatively on the outer circumferential side, with respect to central axis 101. Thrust bushes 41 and 45 and thrust bushes 43 and 46 are arranged to be in contact with clutch hub 21 and hub plate 51, respectively. Clutch hub 21 has surfaces 2 1 a and 21b opposite to each other in the axial direction of central axis 101 and by which the opening surface of trench 25 is formed. Thrust bushes 41 and 45 are arranged to be in plane-contact with surfaces 21a and 21b, respectively. Hub plate 51 has surfaces 51a and 51b opposite to each other in the axial direction of central axis 101 and by which the opening surface of trench 55 is formed. Thrust bushes 43 and 46 are arranged to be in plane-contact with surfaces 51a and 51b, respectively.

Between thrust bushes 41 and 43 and disk plate 32, cone springs 42 and 44 are arranged in a state of compressive deformation, respectively. By the elastic force of cone spring 42, thrust bushes 41 and 45 and clutch hub 21 are held elastically. By the elastic force of cone spring 44, thrust bushes 43 and 46 and hub plate 51 are held elastically.

Coefficient of elasticity of cone spring 44 is larger than that of cone spring 42. In other words, cone spring 42 is easier to deform than cone spring 44.

When clutch linings 33 and 34 are friction-engaged with a fly wheel and a pressure plate, not shown, rotating torque on the engine side is transmitted successively to disk plate 32 and hub plate 51. As the disk plate 32 and hub plate 51 rotate, clutch hub 21 rotates accordingly and, thus, rotating torque on the engine side is transmitted to the transmission.

Clutch device 100 includes a pre-damper mechanism (pre-damper spring 61, thrust bushes 41 and 45 and cone spring 42) set to have low spring stiffness and low hysteresis in order to lower noise during idling, and a main damper mechanism (main damper spring 66, thrust bushes 43 and 46 and cone spring 44) set to have high spring stiffness and high hysteresis in order to reduce noise during vehicle running.

First, idling state will be described. Between hub plate 51 and clutch hub 21, a relative rotation difference generates, and therefore, pre-damper spring 61 is compressively deformed. At this time, teeth surfaces of spline portions 23 and 53 do not contact with each other, and by the expansion/contraction of pre-damper spring 61, torque variation during idling is absorbed. Further, hub plate 51 and disk plate 32 rotate integrally. When relative rotation difference generates between hub plate 51 and disk plate 32 and clutch hub 21, there generates skidding between clutch hub 21 and thrust bushes 41 and 45 that are in pressure contact with clutch hub 21. This attenuates torsional vibration caused by expansion/contraction of the spring, and necessary torsional characteristic is generated.

Next, the state while the vehicle is running will be described. As the torque for running is transmitted from the engine side, teeth surfaces of spline portions 23 and 53 are brought into contact with each other. Next, relative rotation difference generates between hub plate 51 and disk plate 32, resulting in compressive deformation of main damper spring 66. As described above, there generates skidding between hub plate 51 and thrust bushes 44 and 46 that are in pressure contact with hub plate 51, and necessary torsional characteristic is generated.

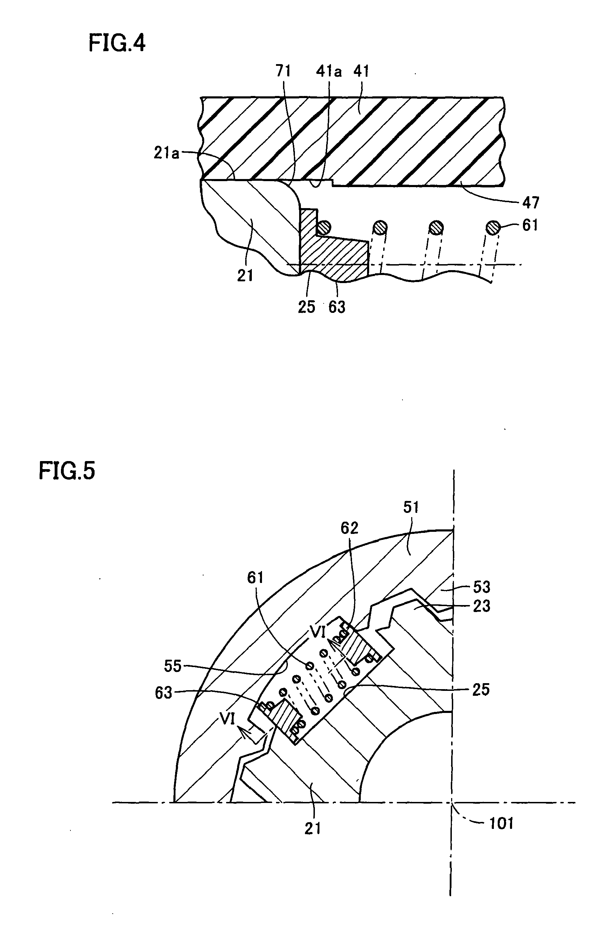

Fig. 4 is a cross-sectional view showing the clutch device taken along the line IV-IV of Fig. 2. Referring to Figs. 3 and 4, in the present embodiment, thrust bush 41 has a protruded portion 47. Thrust bush 41 has a surface 41a that is in plane-contact with surface 21a of clutch hub 21. Protruded portion 47 is formed to protrude from surface 41a toward clutch hub 21. Protruding portion 47 is provided at a position overlapping a pitch circle in which trench 25 is formed, with the central axis 101 being the center. Protruded portion 47 is formed of resin material, integral with thrust bush 41.

It is noted that the present invention is not limited to a structure in which protruded portion 47 is molded integrally with thrust bush 41. A structure may be used in which a member corresponding to protruded portion 47 is attached to thrust bush 41.

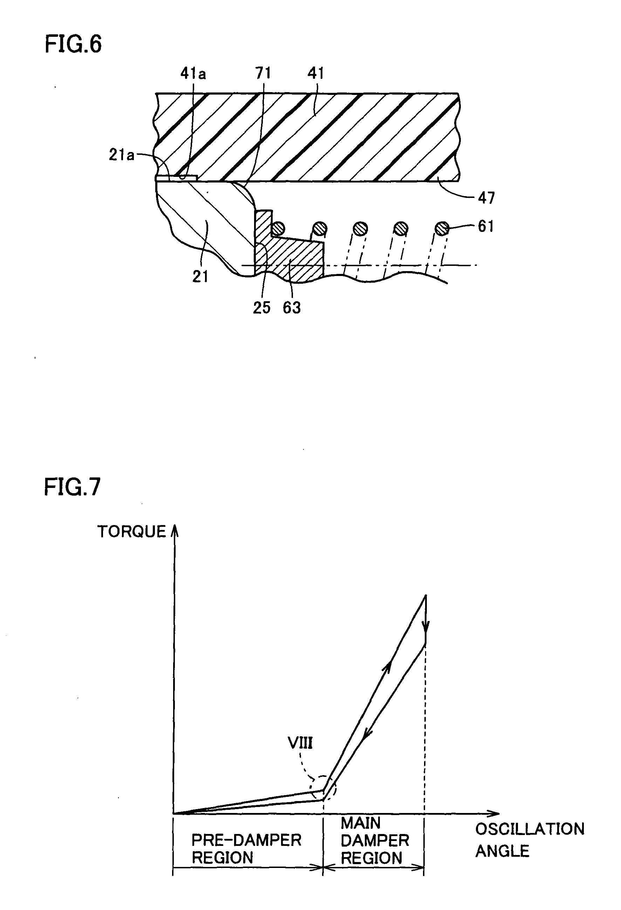

Fig. 5 is a cross-sectional view of the clutch device showing a state of transition from idling to vehicle running state. Fig. 6 is a cross-sectional view of the clutch device taken along the line VI-VI of Fig. 5. Referring to Figs. 3 to 6, protruded portion 47 is formed to be in contact with clutch hub 21 at a part of a prescribed angle range in which hub plate 51 and disk plate 32 and clutch hub 21 rotate relative to each other. Specifically, in the prescribed angle range in which hub plate 51 and disk plate 32 and clutch hub 21 rotate relative to each other, there is a range in which the surface 41 a of thrust bush 41 and clutch hub 21 are in contact, and there is range in which protruded portion 47 and clutch hub 21 are in contact. While protruded portion 47 and clutch hub 21 are in contact with each other, amount of compressive deformation of cone spring 42 becomes large and, therefore, elastic force exerted from cone spring 42 across thrust bush 41 and clutch hub 31 increases.

In the present embodiment, at an end of the prescribed angle range, that is, at a position where teeth surfaces of spline portions 23 and 53 are brought into contact, protruded portion 47 and clutch hub 21 come to the contacted state. At the transition from idling to vehicle running state, protruded portion 47 comes to be in contact with clutch hub 21 before the teeth surfaces of spline portions 23 and 53 are brought into contact with each other.

Clutch hub 21 has a curved corner 71. Curved corner 71 is formed by a curved surface arranged at the corner between a side wall of trench 25 and the surface 21a. Curved corner 71 is provided at a position opposite to protruded portion 47 in a direction of relative rotation of clutch hub 21 and thrust bush 41.

Curved surface 71 may be provided at a corner of protruded portion 47, or curved corners may be provided both on the clutch hub 21 and protruded portion 47.

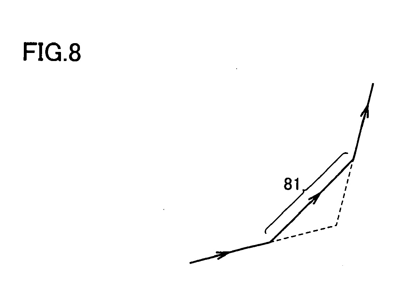

Fig. 7 is a graph showing torsional characteristic of the clutch damper mechanism provided in the clutch device shown in Fig 1. Fig. 8 is a graph showing, in enlargement, a portion surrounded by two-dotted line VIII of Fig. 7.

Referring to Figs. 7 and 8, as described above, pre-damper mechanism has very low spring stiffness and hysteresis. Therefore, it is possible, at the transition from idling to vehicle running state, that teeth surfaces of spline portions 23 and 53 are brought into contact with each other, causing impact noise.

In contrast, according to the present embodiment, before the teeth surfaces of spline portions 23 and 53 are brought into contact, protruded portion 47 and clutch hub 21 are brought into contact with each other and, therefore, the elastic force exerted by cone spring 42 across thrust bush 41 and clutch hub 21 is increased. As a result, the curve representing torsional characteristic in the pre-damper region and the curve representing torsional characteristic in the main damper region come to be connected smooth as indicated by a line 81 in Fig. 8, realizing smooth transition from the pre-damper region to the main damper region. As a result, the impact when teeth surfaces of spline portions 23 and 53 hit each other can be reduced. Further, in the present embodiment, as the curved portion 71 is provided on clutch hub 21, the impact when protruded portion 47 comes to and rides on clutch hub 21 can be reduced.

It is not always necessary to have the protruded portion 47 formed to be in contact with clutch hub 21 at the end of prescribed angle range. A structure is also possible in which teeth surfaces of spline portions 23 and 53 are brought into contact after protruded portion 47 and clutch hub 21, which have been in contact with each other, are separated to non-contact state. Even in such a structure, the above-described effect of reducing impact of teeth surfaces hitting each other can be attained to some extent.

The clutch damper mechanism in accordance with the present embodiment includes rotating body 31 (hub plate 51, disk plate 32 and thrust bush 41) as the first rotating body, clutch hub 21 as the second rotating body, cone spring 42 as the first elastic member, and protruded portion 47 as the elastic characteristic changing member. Clutch hub 21 is provided to be relatively rotatable with respect to rotating body 31, in a prescribed angle range. Cone spring 42 is for elastic support between rotating body 31 and clutch hub 21. Cone spring 42 is provided on rotating body 31. Protruded portion 47 is brought into contact with clutch hub 21 at a part of prescribed angle range, to increase elastic force exerted from thrust bush 41 to rotating body 31 and clutch hub 21.

Rotating body 31 includes hub plate 51 as the relatively rotatable third rotating body, and disk plate 32 and thrust bush 41 as the fourth rotating body. The clutch damper mechanism further includes cone spring 44 as the second elastic member, for elastic support between hub plate 51 and disk plate 32 and thrust bush 41. Cone spring 44 has higher coefficient of elasticity than cone spring 42.

In the clutch damper mechanism structured as described above, it is possible to reduce impact of teeth surfaces of spline portions 23 and 53 hitting each other, and to reduce impact noise. Further, according to the present embodiment, protruded portion 47 is formed integral with thrust bush 41 and, therefore, the effect above can be attained while maintaining simple structure of the clutch damper mechanism.

In the present embodiment, protruded portion 47 is formed from thrust bush 41. It is not limiting and, by way of example, a protruded portion to be in contact with clutch hub 21 may be formed on thrust bush 45, or on thrust bush 43 or 46 for the main damper. Though the present invention is more preferably applied to clutch device 100 having two-stage characteristic, the present invention is also applicable to a clutch device not having multi-stage dumper characteristic.

Although the present invention has been described and illustrated in detail, it is clearly understood that the same is by way of illustration and example only and is not to be taken by way of limitation, the scope of the present invention being interpreted by the terms of the appended claims.

## Claims

1. A clutch damper mechanism, comprising:
a first rotating body (31);
a second rotating body (21) provided rotatable in a prescribed angle range relative to said first rotating body (31);
a first elastic member (42) for elastic support between said first rotating body (31) and said second rotating body (21); and
an elastic characteristic changing member (47) provided on said first rotating body (31), and brought into contact with said second rotating body (21) at a part of said prescribed angle range to increase elastic force exerted from said first elastic member (42) across said first rotating body (31) and said second rotating body (21).

2. The clutch damper mechanism according to claim 1, wherein
said elastic characteristic changing member (47) is a protruded portion formed integral with said first rotating body (31) and protruded toward said second rotating body (21).

3. The clutch damper mechanism according to claim 1 or 2, wherein
said first rotating body (31) is engaged with said second rotating body (21) at an end of said prescribed angle range; and
the part of said prescribed angle range includes the end of said prescribed angle range.

4. The clutch damper mechanism according to any one of claims 1 to 3, wherein
said first rotating body (31) includes relatively rotatable third rotating body (51) and fourth rotating body (32, 41);
said clutch damper mechanism further comprising
a second elastic member (44) for elastic support between said third rotating body (51) and said fourth rotating body (32, 41); and wherein
said second elastic member (44) has a coefficient of elasticity higher than that of said first elastic member (42).
